# EUROPEAN PATENT APPLICATION

(11) **EP 1 885 074 A2**
(43) Date of publication of application: **06.02.2008**
(21) Application number: 07112004.2
(22) Date of filing: 06.07.2007
(51) Int. Cl.: H04H 1/00

(54) **Apparatus for receiving data broadcast signal and method of processing the same**

(30) Priority: 10.07.2006 KR 20060064355
(71) Applicant: LG Electronics Inc., Seoul, 150-721 (KR)
(72) Inventor: Lee, Hak Joo, Dongjak-gu 156-090, SEOUL (KR)
(74) Representative: Cabinet Plasseraud

(57) **Abstract**

An apparatus for receiving a data broadcast signal and method of processing the same are disclosed, by which a quality of data broadcasting is enhanced. The present invention includes receiving the data broadcast signal including a data broadcast application and information for the data broadcast application, if a use state change of the data broadcast application occurs, creating use state information indicating the use state change of the data broadcast application, and transmitting the created use state information for the data broadcast application to an external server.

## Description

This application claims the benefit of the Korean Patent Application No. 10-2006-0064355, filed on July 10, 2006, which is hereby incorporated by reference as if fully set forth herein.

### BACKGROUND

### Field

The present invention relates to an apparatus for receiving a data broadcast signal and method of processing the same.

### Discussion of the Related Art

Generally, according to the rapid development of digital broadcasting, a broadcasting station or the like transmits various data broadcast signals together with or independently from video and audio broadcast signals.

As a data broadcasting platform, there is OCAP(Open Cable Application Platform) data broadcasting, MHP(Multimedia Home Platform) data broadcasting, ACAP(Advanced Common Application Platform) data broadcasting or the like.

An application provider or a broadcasting station is unable to acquire information indicating whether an application is used within a receiver. So, the information acquisition depends on an inaccurate method through a secondary inquiry and the like.

### SUMMARY

According to one general implementation, an apparatus for receiving data broadcast signal and method of processing the same that substantially obviate one or more problems due to limitations and disadvantages of the related art.

According to other general implementation, an apparatus for receiving a data broadcast signal and method of processing the same, by which a quality of data broadcasting is enhanced.

According to another general implementation, an apparatus for receiving a data broadcast signal and method of processing the same, by which user's satisfaction is enhanced to promote practical use of application.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of processing a data broadcast signal according to the present invention includes the steps of receiving the data broadcast signal including a data broadcast application and information for the data broadcast application, if a use state change of the data broadcast application occurs, creating use state information indicating the use state change of the data broadcast application, and transmitting the created use state information for the data broadcast application to an external server.

In another aspect of the present invention, an apparatus for receiving a data broadcast signal includes a signal receiving unit receiving the data broadcast signal including a data broadcast application and information for the data broadcast application, a data extracting unit extracting the data broadcast application and an application information table, and an application controlling unit controlling a creation and transmission of use state information indicating a use state change of the data broadcast application.

In a further aspect of the present invention, a data broadcast signal, which is transmitted from a transmitting side to a receiving side, includes a data broadcast application and an application information table indicating information for the data broadcast application, wherein the application information table includes a descriptor for specifying a path to a server collecting a presence or non-presence of an application use state change in the receiving side.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the implementations and are incorporated in and constitute a part of this disclosure, illustrate implementations and together with the description serve to explain the implementations. In the drawings;

FIG. 1 is a hierarchical diagram for a concept of processing a data broadcast application and additional information according to the present invention;

FIG. 2 is a flowchart of a method of processing a data broadcast according to an embodiment of the present invention;

FIG. 3 is a block diagram of a server for collecting information for an application according to the present invention;

FIG. 4 is a diagram of a descriptor indicating return path information in FIG. 3;

FIG. 5 is a characteristic diagram of state information;

FIG. 6 is a diagram of an example of a use state information message of the present invention; and

FIG. 7 is a block diagram of a data broadcast receiver according to an embodiment of the present invention.

### DETAILED DESCRIPTION

Reference will now be made in detail to the implementations, examples of which are illustrated in the accompanying drawings. Wherever possible, the same reference numbers will be used throughout the drawings to refer to the same or like parts.

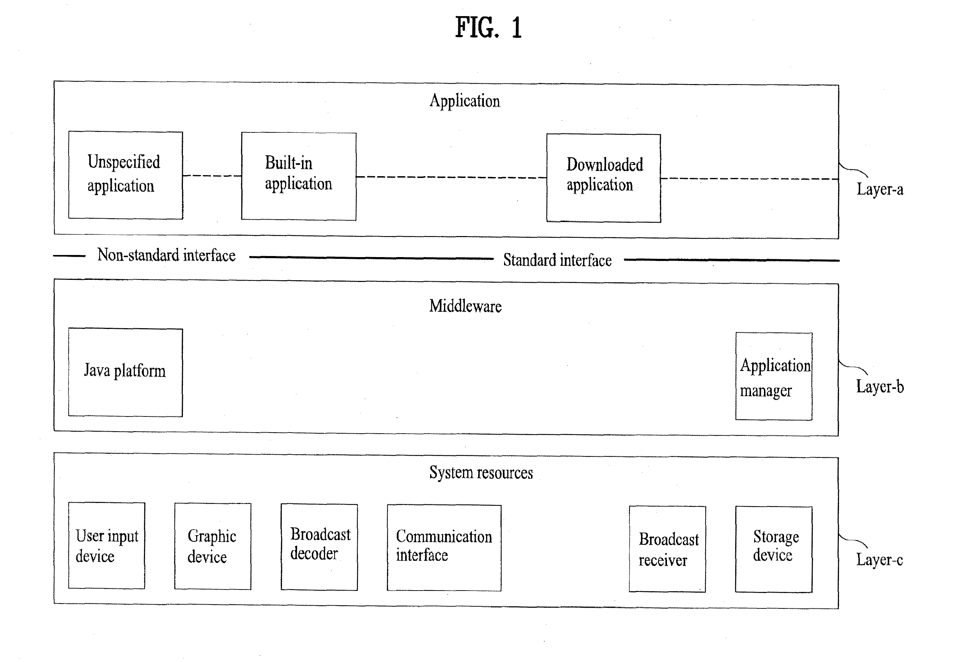

A method of receiving and transmitting broadcast signals according to one embodiment of the present invention is explained with reference to FIG. 1 as follows.

FIG. 1 is a hierarchical diagram for a concept of processing a data broadcast application and additional information according to the present invention.

Referring to FIG. 1, if a broadcast receiver receives a broadcast content including an application, internal function blocks of the broadcast receiver process the received broadcast content. A tuner of the broadcast receiver receives the broadcast content via a selected channel and a broadcast decoding unit is then able to decode the received broadcast content (Layer-c).

A user can send a control command for a processing direction of the decoded broadcast content via an application interface. (Layer-a and Layer-b). And, the decoded broadcast content can be displayed to the user via the application interface (Layer-a).

In this case, an application platform including an application manager, a Java platform, and the like is responsible for an overall control of the application. The application platform receives a user control command from a user via the application interface and then activates the application carried together with the broadcast content.

In the following description, a hardware & software platform, which is responsible for an overall control of an application and monitors a status of the application, is named middleware.

In a data broadcast signal processing method according to the present invention, a transmitting side transmits a data signal, which carries a descriptor specifying a return path, to a receiver. And, use state information for use state change of an application within the receiver is loaded on a data signal and then transmitted via the return path. The use state information can include information for a presence or non-presence of occurrence of a use state change or detailed information for an occurring use state change. And, the use state information can include both information indicating whether a use state change has occurred and information for a type of the use state change.

The middleware of the receiver extracts return path information from the received data signal, recognizes a use state change occurrence of an application within the receiver, and then configures a use state information message.

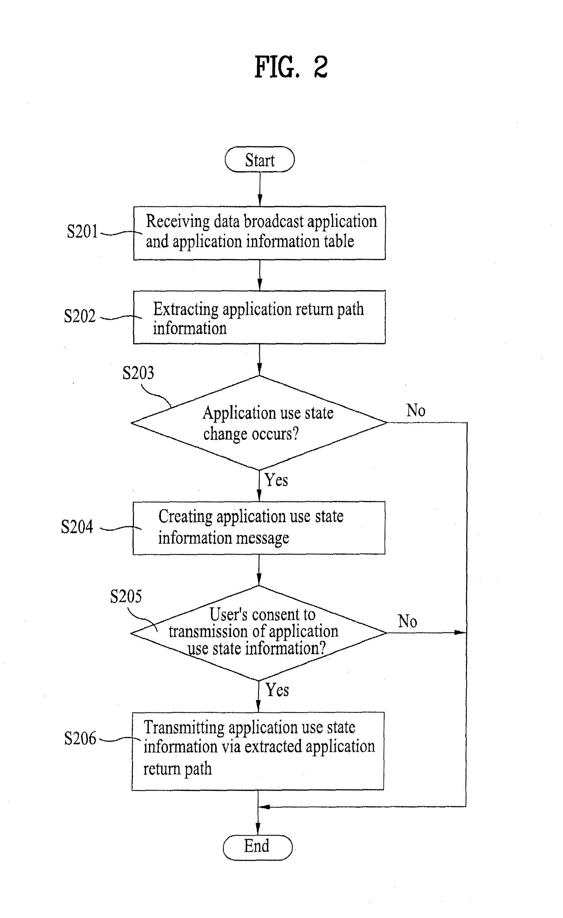

FIG. 2 is a flowchart of a method of processing a data broadcast according to an embodiment of the present invention.

Referring to FIG. 2, a method of processing a data broadcast according to the present invention includes a step (a) of receiving a data broadcast signal including a data broadcast application and information for the application, a step (b) of generating use state information indicating a use state change of the data broadcast application, and a step (c) of transmitting the acquired use state information for the application. In this case, the method further includes the step of confirming a presence or non presence of user's consent before transmitting the use state information for the application.

The step (a) is the step s201 of receiving the data broadcast application and the information for the application. In this case, the information for the application includes return path information for feeding back the use state information for the application in a receiver.

In particular, the information for the application received from a transmitting side can be configured as a table. In the following description, an information table for an application is named an application information table. The application information table can include a descriptor indicating return path information that is a path to an external server to which the use state information for the application generated by the receiver will be transmitted. So, a step S202 of extracting the return path information from the return path descriptor of the received application information table can be further included.

In the step (b), it is decided whether a use state change of the application occurs within the receiver (S203). If the use state change of the application occurs, an application use state information message is configured (S204).

In the step (c), the application use state information generated in the step (b) is transmitted to the external server via the return path extracted in the step (a) (5206) .

In this case, since the application use state information is personal information, a step of confirming a presence or non-presence of user's consent to the use state information transmission prior to transmitting the application use state information can be further included (S205).

In the following description, the return path information and the application use state information are explained in detail.

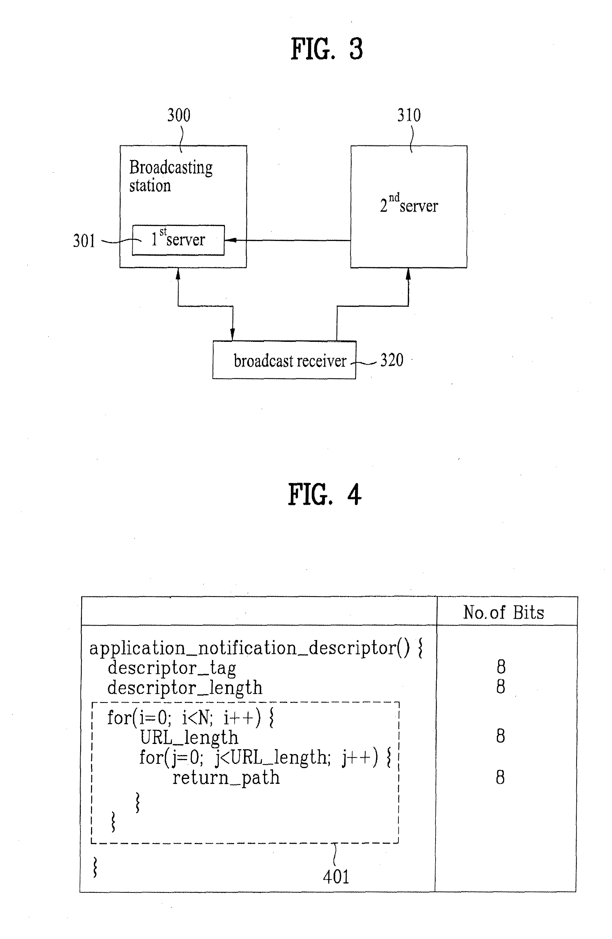

FIG. 3 is a block diagram of a server for collecting information for an application according to the present invention, and FIG. 4 is a diagram of a descriptor indicating return path information in FIG. 3. A return path information descriptor is explained with reference to FIG. 3 and FIG. 4 as follows.

Referring to FIG. 3 and FIG. 4, the present invention is directed to the collection of information for a use state change of an application occurring within an individual receiver. For this, a subject for collecting the use state change of the application should be proposed. So, an external server for feeding back use state information exists. The external server is the subject for collecting application use state information. In particular, the external server may include a server 301 of a broadcasting station 300 or a second server 310 independent from the broadcasting station. As an example of the second server 310, there is a server of an application provider. Alternatively, all kinds of subjects for collecting information for an application can correspond to external server. Namely, the subject, to which use state information for an application is fed back and which attempts to correct and complement the information, corresponds to the external server.

A return path information descriptor (hereinafter called a path information descriptor) can be included in an application information table (AIT) for describing information for an application as a target of a use state information collection.

The path information descriptor is included in the application information table and then transmitted to the receiver together with a data broadcast signal.

The path information descriptor can be included in a common loop or an application loop of the application information table. The application information table can be defined as one table for one application or one table for a plurality of applications. So, information for a plurality of applications can be included in one application information table. In this case, a common description for a plurality of applications is defined in a specific place that is a common loop. And, a description for an individual application is defined in another specific place that is an application loop.

For instance, assuming that there exists an application information table-A containing information for application-1, application-2 and application-3, if a server for collecting use state information for the application-1, application-2 and application-3 in common, there exists a path information descriptor according to the present invention in a common loop of an information table-A. Yet, in case that the application-1, application-2 and application-3 differ from each other or in case that a return path is not common to the applications, the path information descriptor exists in a lower structure of the corresponding application, i.e., in an application loop.

The path information defines a return path to the application use state information collecting server. The return path means a communication path to a server from a receiver and also means an address that specifies the server. A path information descriptor application_notification_descriptor includes a descriptor tag field, a descriptor length field, a return path field 401.

In this case, bi-directional communication via the return path ca use one of OC(optical carrier), IP(Internet Protocol), Interaction Channel Protocol, and the like. This is just exemplary. Any bi-directional communication capable of specifying a path is possible and its range is not restricted. In this case, the path can be specified as URL (uniform resource locator). Namely, in case of an embodiment that an address of a server for collecting application use state information using URL, the path information descriptor can include a return path field and the return path field can specify URL address. One of DAB URL, DMB URL, Internet URL, ATSC URL and the like is available for the URL format. And, an address specifying scheme varies according to the URL format.

The descriptor tag field includes at least one character attached to a data structure in programming and includes information for the data structure to be identified. And, the descriptor tag field can be configured to have 8-bit size.

The descriptor length indicates a total length of a descriptor and can be represented as 8-bit size.

The return path field 401 is a field for specifying a path of a server that transmits use state information. The return path field can have a value for a format for indicating a path. For instance, if a path is specified as URL, URL indicating a path of an external server can be given as a value. In this case, a corresponding address can be represented as being divided into 8 bits.

The path information descriptor including the fields is included in an application information table and then transmitted as a data signal. So, the receiver size receives the application information table, parses the received table to extract the path information descriptor, and then extracts path information.

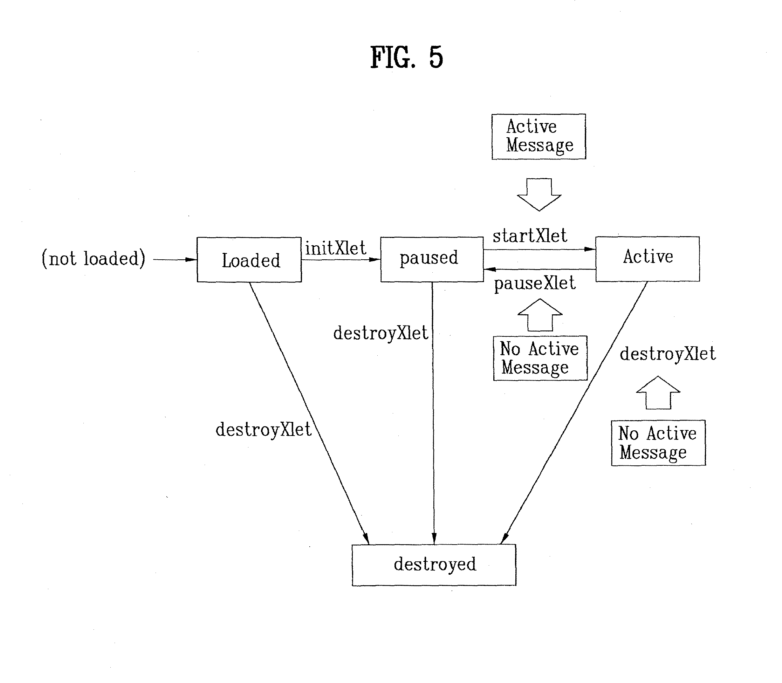

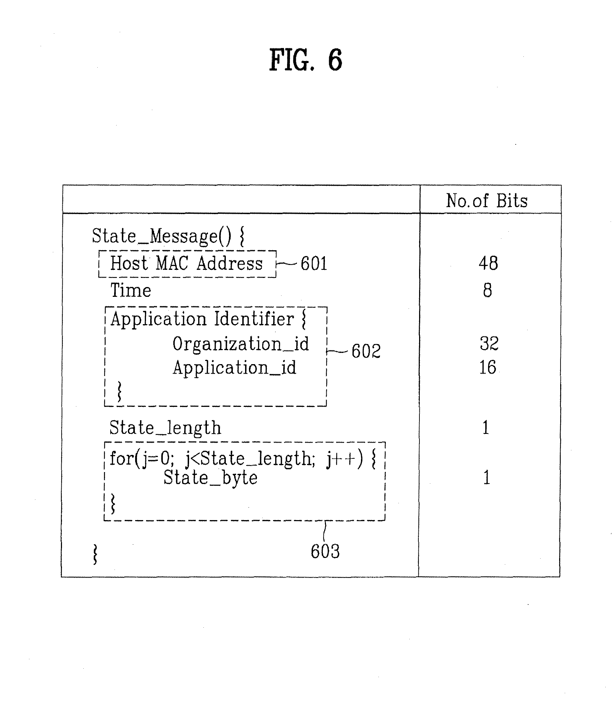

FIG. 5 is a characteristic diagram of state information. State information generated according to a use state change of an application is explained with reference to FIG. 6 as follows.

First of all, a use state change means that an active state of using an application is changed into a non-active state of not using an application, and vice versa.

A state of an application can be categorized into a loaded state, a paused state, a destroyed state, and an active state. The loaded state means that an application is received by a receiver and loaded on a platform of middleware. The paused state means that the application in the loaded state stays in a state that an initXlet command is executed. The active state means a state that the application is utilized if a startXlet command is executed in the paused state. And, the destroyed state means a state that the application is deleted from the platform of the middleware as a destroyXlet command is executed in the loaded, paused or active state.

The non-active state means a state that an application is not utilized. And, the non-active state means the paused state that a use of the application is paused, the destroyed state that the application is deleted from the platform of the middleware, or a state that the application stays in a loaded state before start.

So, in case that the paused state is changed into the active state, an active state information message is created. In case that the active state is changed into the paused state or that the loaded, paused or active state is changed into the destroyed state, a non-active state message is created.

A message, which is created by the middleware detecting a presence or non-presence of a state change of the application and sent to a sever collecting state information, is explained as follows.

FIG. 6 is a diagram of an example of a use state information message of the present invention.

Referring to FIG. 6, a use state information message (State_Message) includes a receiver identifying field for identifying a receiver, an application identifier field for identifying information for which application within a receiver, and a use state information field indicating a use state change of an application.

The receiver identifying field 601 includes information for identifying a receiver and can include 48 bits. The information for identifying a receiver ca use one of Host MAC Address, a host serial number, IP Address, and the like. And, any information for identifying a receiver is usable.

The application identifier field 602 includes 32-bit organization ID (Organization id) and 16-bit application ID (Application_id) to identify an application. And, any information for identifying an application is usable.

A state information field(603) can indicate either a change into an active state or a change into a non-active state. In this case, the state information field can include at least one bit. For instance, by having the state information field set to 1 bit, the active state can be represented as having the state information field set to 1 or the non-active state can be represented as having the state information field set to 0, and vice versa. In this case, by setting the state information field to 2 bits, a state of an application can be described in detail. In particular, the loaded state, the paused state, the destroyed state and the active state can be represented as defined by 00, 01, 10, and 11, respectively. This is just exemplary and can be represented as a value having at least one bit.

As an embodiment of the collection of the use state information, which is supported in Java language dimension through try-catch sentence in Java, is usable. In particular, the middleware (program such as a manager for managing Xlet) collects and stores the use state change occurring in Xlet or middleware itself as try-catch sentence or transmits the use state change to the server via a return path by real time.

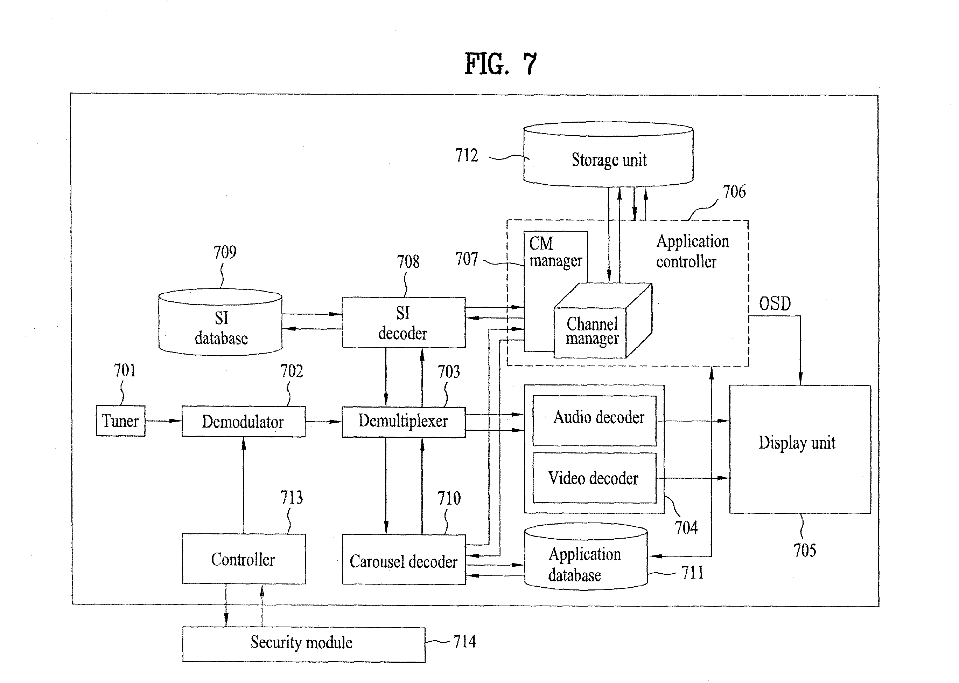

FIG. 7 is a block diagram of a data broadcast receiver according to an embodiment of the present invention.

Referring to FIG. 7, a data broadcast receiver according to an embodiment of the present invention includes a tuner 701, a demodulator 702, a demultiplexer 703, an A/V (audio/video) decoder 704, a display unit 705, an application controller 706, a channel manager 707, a SI (system information) decoder 708, a SI (system information) database 709, a carousel decoder 710, an application database 711, a NVRAM (or flash memory) 712, a controller 713, and the like. And, the controller 713 can be connected to an external security module (cablecard) 714.

The digital broadcast receiver can include a digital television receiver for example. In this case, the digital television receiver is capable of receiving and processing audio/video data and application information that defines the return path information transmitted according to the present invention.

The tuner 701 receives a terrestrial or cable digital television (DTV) signal and then transfers the received signal to the demodulator 702. In this case, the tuner 701 is under the control of the channel manager 707 and reports result and strength of the received signal to the channel manager under the control of the channel manager 707.

The demodulator 702 demodulates a broadcast signal tuned and received by the tuner 701 and then transfers the demodulated signal to the demultiplexer 703. In performing demodulation, the demodulator 702 performs VSB (vestigial sideband) demodulation in case that the signal received from the tuner 701 is a terrestrial broadcast signal. In performing demodulation, the demodulator 702 performs QAM (quadrature amplitude modulation) or VSB (vestigial sideband) demodulation in case that the signal received from the tuner 701 is a cable broadcast signal. For example, the demodulation of the terrestrial broadcast signal corresponds to 8VSB demodulation or the demodulation of the cable broadcast signal corresponds to 64/256 QAM demodulation or 16VSB demodulation.

The demultiplexer 703 is cable of demultiplexing the received broadcast signal demodulated by the demodulator 702. In particular, the demultiplexer 703 is capable of filtering audio data, video data, and data associated with data broadcast from the inputted transport stream packets. In this case, the demultiplexer 703 is able to filter a descriptor defining effective time information for the transmitted data associated with the present invention.

In particular, the demultiplexer 703 is able to demultiplex the received broadcast signal under the control of the SI decoder and/or the carousel decoder 710. For instance, the demultiplexer 703 is able to demultiplex tables including the audio data, the video data, and the data broadcast associated data. In performing the demultiplexing, the demultiplexer 703 can check a header part in common to the received tables.

In more particular, the demultiplexer 703 creates a section of table for A/V broadcast service and then transfers it to the SI decoder 708. And, the demultiplexer 703 creates a table section by filtering carousel data for a data broadcast service associated with the present invention and then transfers it to the carousel decoder 710.

And, the demultiplexer 703 is able to demultiplex A/V transport stream packet under the control of the channel manager 707. So, if A/V PID (packet identifier) of a corresponding virtual channel is set, the demultiplexer 703 demultiplexes elementary streams of the A/V and then transfers them to the A/V decoder 704.

The A/V decoder 704 receives the A/V elementary stream packets from the demultiplexer 703 and then decodes the received packets by MPEG-2, AC3 or the like. The A/V decoder 704 matches sync of the decoded A/V data by a VDP (video display processor). The sync-matched data is then transferred to the display unit 705 by the A/V decoder 704 to be displayed thereon.

In case that the received A/V data decoded by the A/V decoder 704 is a video signal, the display unit 705 outputs the video signal via a screen. In case that the received A/V data decoded by the A/V decoder 704 is an audio signal, the display unit 705 outputs the audio signal via a speaker. In particular, if the received data, which is decoded by the decoder 704 and corresponds to the video signal, is outputted via the screen, the display unit 705 can be according to OSD (on screen display) graphic data.

The channel manager 707 manages a channel map and can comply with a viewer's request by controlling the tuner 701 and the SI decoder 708. The channel manager 707 makes a request for parsing a channel associated table of a channel to be tuned to the SI decoder 708 and then receives a corresponding result. The channel manager 707 updates the channel map based on the received result. The channel manager 707 sets the A/V PID in the demultiplexer 703 and then makes a decoding request.

The SI decoder 708 is an SI control module for parsing a table section included in a broadcast signal. The SI decoder 708 is capable of performing a slave operation under the control of the channel manager 707.

In particular, the SI decoder 708 is able to control the demultiplexer 703 to parse the table section included in the broadcast signal. In more particular, the SI decoder 708 enables the demultiplexer 703 to create a corresponding table section by setting PID for the corresponding table.

The SI decoder 708 receives and parses PSI section created for MPEG-2 system by the demultiplexer 703 or PSIP section created for ATSC by the demultiplexer 703. And, the SI decoder 708 enables the parsed information to be stored in the SI database 709.

In doing so, the SI decoder 708 parses, i.e., reads the reset of the actual section data part, which was not filtered or unable to be filtered by the demultiplexer 703, entirely and then enables the corresponding data to be recorded in the SI database 709.

The carousel decoder 710 is able to receive and parse data broadcast associated data transmitted by the demultiplexer 703, e.g., the application information table transmitted according to the present invention. The carousel decoder 710 extracts a return path information descriptor by parsing the application information table.

The carousel decoder 710 enables the parsed data to be stored in the application database 711 and is able to monitor a presence or non-presence of update. Once an update situation takes place, the carousel decoder 710 is able to play a role in keeping the information stored in the application database 711 as a latest one by re-interpreting the corresponding part. The carousel decoder 710 corresponds to an embodiment of a data extracting unit.

And, the carousel decoder 710 is able to perform a slave operation under the control of the channel manager 707 like the SI decoder 708.

The application controller 706 recognizes an existence and location of a server, to which use state information will be transferred, from the extracted return path information descriptor. The application controller 706 decides a presence or non-presence of a use state change occurrence in a platform and then creates a corresponding use state information message.

In this case, the application controller 706 is able to obtain the use state information supported in Java language dimension through try-catch sentence in Java. In particular, the middleware (program such as a manager for managing Xlet) collects and stores the use state change occurring in Xlet or middleware itself as try-catch sentence or transmits the use state information by real time.

The application controller 706 receives a decoding status from the A/V decoder 704 to control the display unit 705 via the OSD. In this case, the application controller 706 manages an application status and a database and manages to control data broadcast associated OSD. So, whether to transmit the use state information is decided by receiving a user's consent for transmitting application use state information of the present invention.

If the server retransmits the corrected or complemented application, the application controller 706 executes the re-received application by real time or executes an upgrade of the stored application.

And, the application controller 706 controls to the cannel manager 707 to perform a channel associated operation (channel map management and SI decoder operation). The application controller 706 stores/recovers overall TV GUI control, user request and TV system status in/from the NVRAM (or flash memory).

The digital television receiver can participate in demodulation of the digital broadcast signal, which is received via the tuner 701, using the externally connected security module 714. In particular, if the security module 714 transfers data associated with the demodulation to the digital television receiver, the controller 713 within the digital television receiver receives the data, generates a signal for controlling the received digital broadcast signal, and then transfers the generated signal to the demodulator 702. The demodulator 702 performs the demodulation according to the control signal to complete the decoding through the above-explained process.

Accordingly, the present invention provides the following effects or advantages.

First of all, a subject attempting to collect information for an application is able to accurately know a presence or non-presence of application utilization in an individual receiver, which can be used for creating or developing a further application.

Secondly, an aspect difference between a provider and a user is substantially reduced to enable an appropriate arrangement of an application, whereby options for selecting a data broadcast can be diversified.

Thirdly, advertisement policy can be specified due to an accurate evaluation of a utilization rate of an application.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of processing a data broadcast signal, comprising the steps of:
receiving the data broadcast signal including a data broadcast application and information for the data broadcast application;
if a use state change of the data broadcast application occurs, creating use state information indicating the use state change of the data broadcast application; and
transmitting the created use state information for the data broadcast application to an external server.

2. The method of claim 1, wherein the received application information comprises an application information table and wherein the application information table includes return path information for feeding back information for an application.

3. The method of claim 2, wherein the application information table includes a descriptor indicating a path to the external sever for collecting the use state information of the application.

4. The method of claim 3, further comprising the step of extracting the descriptor indicating the path to the external server by parsing the application information table.

5. The method of claim 3, wherein the descriptor is located at a common loop or an application loop of the application information table.

6. The method of claim 1, wherein the use state information is represented an active state of using an application or a non-active state of not using an application.

7. The method of claim 6, wherein the non-active state is one of a loaded state, a paused state or a destroyed state.

8. The method of claim 1, wherein the use state information is configured in a format of a message and wherein the message comprises a receiver identifying field for identifying a receiver, an application identifier field for identifying an application, and a use state information field for indicating a use state change of the application.

9. The method of claim 1, further comprising the steps of:
receiving a signal of a presence or non-presence of user's consent to a transmission of the use state information; and
deciding whether to transmit the use state information according to the presence or non-presence of the user's consent.

10. The method of claim 3, wherein the created use state information for the data broadcast application is transmitted via the path indicated by the application information table.

11. An apparatus for receiving a data broadcast signal, comprising:
a signal receiving unit receiving the data broadcast signal including a data broadcast application and information for the data broadcast application;
a data extracting unit extracting the data broadcast application and an application information; and
an application controlling unit controlling a creation and transmission of use state information indicating a use state change of the data broadcast application.

12. The apparatus of claim 11, wherein the application information comprises an application information table and wherein the application information table includes return path information for feeding back information for an application.

13. The apparatus of claim 12, wherein the application information table includes a descriptor indicating a path to the external sever for collecting the use state information of the application and wherein the data extracting unit extracts the return path information by parsing the application information table.

14. The apparatus of claim 11, wherein the application controlling unit creates an application use state information message and wherein the application use state information message comprises a receiver identifying field for identifying a receiver, an identifier field for identifying an application, and a use state information field for indicating a use state change of the application.

15. The apparatus of claim 11, wherein the application controlling unit receives a signal of a presence or non-presence of user's consent to a transmission of the use state information and then decides whether to transmit the use state information.

16. A data broadcast signal, which is transmitted from a transmitter to a receiver, the data broadcast signal comprising:
a data broadcast application; and
an application information table indicating information for the data broadcast application,
wherein the application information table includes a descriptor for specifying a path to an external server collecting an application use state information in the receiver.

17. The data broadcast signal of claim 16, wherein the descriptor includes a URL address field for specifying the path to the server.

18. The data broadcast signal of claim 17, wherein the descriptor is located at a common loop or an application loop of the application information table.
